# EUROPEAN PATENT APPLICATION

(11) **EP 4 451 437 A1**
(43) Date of publication of application: **23.10.2024**
(21) Application number: 22956714.4
(22) Date of filing: 29.08.2022
(51) Int. Cl.: H01M 50/15

(54) **TOP COVER ASSEMBLY, BATTERY CELL, BATTERY, AND ELECTRICAL DEVICE**

(71) Applicant: Contemporary Amperex Technology (Hong Kong) Limited, Central, Central And Western District (HK)
(72) Inventor: WANG, Bangyong, Ningde, Fujian 352100 (CN); SHI, Chunmei, Ningde, Fujian 352100 (CN); YU, Honggang, Ningde, Fujian 352100 (CN); XIE, Yongfeng, Ningde, Fujian 352100 (CN)
(74) Representative: Thoma, Michael
(86) International application number: PCT/CN2022/115435
(87) International publication number: WO 2024/044878

(57) **Abstract**

The present application relates to a top cover assembly, a battery cell, a battery, and a power consuming device. The top cover assembly comprises: a body (211), the body (211) being provided with a first electrode hole (2111) and a second electrode hole (2112) in a thickness direction (a) of the body itself, and the first electrode hole (2111) and the second electrode hole (2112) being spaced in a length direction (b) of the body; and a protruding portion (212) protruding in the thickness direction (a) of the body (211) to be formed on a side surface of the body (211) that is configured to face an interior of the shell, the protruding portion (212) being located between the first electrode hole (2111) and the second electrode hole (2112) in the length direction (b) of the body (211), wherein the protruding portion (212) is located on a side close to the first electrode hole (2111) in the length direction (b) of the body (211), and the length direction (b) of the body (211) is perpendicular to the thickness direction (a) of the body (211).

## Description

### Technical Field

The present application relates to the technical field of batteries, and in particular, to a top cover assembly, a battery cell, a battery, and a power consuming device.

### Background Art

In a battery structure, an overcurrent capacity of a tab may affect a charge-discharge capacity of a battery, and thus affect the safety performance and service life of the battery. Currently, when a top cover assembly, a shell and an electrode assembly together form a battery cell, a width of the formed tab is limited due to the limitation of the structure of the top cover assembly. As a result, an overcurrent area of the tab is relatively small, which affects the overcurrent capacity of the tab and does not facilitate improvement of the charge-discharge capacity of the battery.

### Summary of the Invention

In view of this, it is necessary to provide a top cover assembly, a battery cell, a battery, and a power consuming device against the problems that an overcurrent area of a tab is small due to a limited width of the tab currently and thus an overcurrent capacity of the tab is low.

In a first aspect, the present application provides a top cover assembly for covering a shell of a battery cell, the top cover assembly comprising:
a body, the body being provided with a first electrode hole and a second electrode hole in a thickness direction of the body itself, and the first electrode hole and the second electrode hole being spaced in a length direction of the body; and
a protruding portion protruding in the thickness direction of the body to be formed on a side surface of the body that is configured to face an interior of the shell, the protruding portion being located between the first electrode hole and the second electrode hole in the length direction of the body,
wherein the protruding portion is located on a side close to the first electrode hole in the length direction of the body, and the length direction of the body is perpendicular to the thickness direction of the body.

In a technical solution of an embodiment of the present application, the protruding portion is eccentrically arranged on the body in the length direction of the body, and the protruding portion is biased to a side of the first electrode hole, that is, a distance between the protruding portion and the first electrode hole is less than a distance between the protruding portion and the second electrode hole in the length direction of the body. Therefore, the distance between the protruding portion and the second electrode hole may be used to accommodate one tab in the electrode assembly that needs to be increased in width. Correspondingly, the distance between the protruding portion and the first electrode hole is used to accommodate the other tab in the electrode assembly. Therefore, the width of the tab arranged corresponding to the second electrode hole may be increased to increase the overcurrent area of the tab, thereby improving the overcurrent capacity of the tab, so as to improve the safety performance and service life of the battery cell.

In some embodiments, a length of the protruding portion is less than or equal to 20 mm in the length direction of the body.

In a technical solution of an embodiment of the present application, the length of the protruding portion is set to be less than or equal to 20 mm, so that the distance between the protruding portion and the first electrode hole or the second electrode hole can be maximized on the basis that the protruding portion is convenient to mold and manufacture, thereby increasing the width of the tab and improving the overcurrent capacity of the tab.

In some embodiments, a height of the protruding portion is less than or equal to 10 mm in the thickness direction of the body.

In a technical solution of an embodiment of the present application, the height of the protruding portion is set to be less than or equal to 10 mm, and a larger accommodating space can be provided for the electrode assembly inside the shell on the basis that the protruding portion is convenient to mold and manufacture, so as to improve the service performance of the battery cell.

In some embodiments, a width of the protruding portion is less than or equal to a width of the body in a width direction of the body, and the width direction of the body is perpendicular to the length direction of the body and the thickness direction of the body.

In a technical solution of an embodiment of the present application, when the top cover assembly covers the shell of the battery cell, the width of the protruding portion is less than or equal to the width of the body, so that the protruding portion can be smoothly accommodated in the shell, and the sealing performance of the top cover assembly to the shell is better.

In some embodiments, the protruding portion comprises a first sub-protruding portion and a second sub-protruding portion, wherein
the first sub-protruding portion and the second sub-protruding portion are spaced in the width direction of the body; or the first sub-protruding portion and the second sub-protruding portion are continuously arranged in the width direction of the body.

In a technical solution of an embodiment of the present application, when the first sub-protruding portion and the second sub-protruding portion are continuously arranged in the width direction of the body, that is, the first sub-protruding portion and the second sub-protruding portion are of an integrated structure, the manufacturing and molding of the protruding portion is facilitated. When the first sub-protruding portion and the second sub-protruding portion are spaced in the width direction of the body, a larger avoidance space can be further provided for the tab corresponding to the second electrode hole, thereby further increasing the width of the tab corresponding to the second electrode hole and improving the overcurrent capacity.

In some embodiments, the body is provided with a pressure relief hole penetrating in the thickness direction of the body itself, and the protruding portion is provided with a through hole penetrating in the thickness direction of the body and communicating with the pressure relief hole.

In a technical solution of an embodiment of the present application, the protruding portion is provided with the through hole, which communicates with the pressure relief hole, so that when the battery cell needs pressure relief, an internal pressure of the battery cell can be released outwards from the pressure relief hole through the through hole to prevent the protruding portion from affecting the pressure relief of the battery cell, thereby improving the safety performance of the battery cell.

In some embodiments, in a plane perpendicular to the thickness direction of the body, a projection of the protruding portion partially overlaps a projection of the pressure relief hole.

In a technical solution of an embodiment of the present application, the part of the protruding portion overlapping the pressure relief hole can provide a certain function of stabilizing the pressure relief hole, so as to prevent a pressure relief member in the pressure relief hole from loosening, thereby ensuring structural integrity of the pressure relief hole and achieving smooth pressure relief of the battery cell.

In some embodiments, the body comprises:
a top cover sheet; and
insulating sheets stacked in a thickness direction of the top cover sheet on a side of the top cover sheet that is configured to face the interior of the shell, wherein
the protruding portion protrudes to be formed on a side surface of the insulating sheets that face away from the top cover sheet.

In a technical solution of an embodiment of the present application, the top cover sheet is less prone to deformation when subjected to compression and collision, such that the battery cell can have a higher structural strength, and safety performance can also be improved. An insulating member is arranged on a side of the top cover sheet that faces the shell, and is configured to isolate an electrically connected component in the shell from the top cover sheet, so as to reduce the risk of a short circuit.

In some embodiments, a material of the insulating sheets is one or more of polypropylene, polyethylene, and polyethylene terephthalate.

In a technical solution of an embodiment of the present application, when the insulating sheets are made of organic high polymers such as polypropylene, polyethylene, and polyethylene terephthalate, the molding of the insulating sheets and the assembly of the battery cell can be facilitated.

In some embodiments, the protruding portion and the insulating sheets are of an integrally molded structure.

In a technical solution of an embodiment of the present application, the method of integrated molding is easy to operate, which facilitates industrialization of the manufacturing process.

In a second aspect, the present application provides a battery cell, the battery cell comprising:
a shell, the shell being internally provided with an accommodating space, and the shell being provided with an opening communicating with the accommodating space;
a top cover assembly described above, the top cover assembly hermetically covering the opening in a direction of the protruding portion towards the opening; and
an electrode assembly accommodated in the accommodating space.

In some embodiments, the electrode assembly comprises a first tab corresponding to the first electrode hole and a second tab corresponding to the second electrode hole, wherein
the second tab is a composite substrate tab, and the protruding portion is located on a side close to the first tab in a length direction of the top cover assembly, so as to form an avoidance space for the second tab to pass through on a side of the protruding portion close to the second electrode hole.

In a technical solution of an embodiment of the present application, since the second tab is a composite substrate tab, the overcurrent capacity of the second tab is lower than that of the first tab. Therefore, the first tab is arranged corresponding to the first electrode hole, and the second tab is arranged corresponding to the second electrode hole, such that the second tab can have a larger width in the avoidance space, thereby increasing the overcurrent area of the second tab and improving the overcurrent capacity of the second tab.

In some embodiments, the second tab is a positive electrode tab connected to a positive electrode composite current collector.

In a technical solution of an embodiment of the present application, the positive electrode tab is arranged corresponding to the second electrode hole, and the protruding portion is close to the first electrode hole. Therefore, the positive electrode tab has a larger arrangement space, so that the width of the positive electrode tab can be increased, the overcurrent area of the positive electrode tab can be increased, and the overcurrent capacity of the positive electrode tab can be improved.

In some embodiments, a width of the second tab is greater than a width of the first tab in the length direction of the top cover assembly.

In a technical solution of an embodiment of the present application, the second tab can have a larger overcurrent area, thereby improving the overcurrent capacity of the second tab.

In some embodiments, a distance between the protruding portion and the first tab is 0-12 mm in the length direction of the top cover assembly.

In a technical solution of an embodiment of the present application, the distance between the protruding portion and the first tab is set to 0-12 mm, which can avoid position overlapping between the protruding portion and the first tab, thereby avoiding mutual interference.

In a third aspect, the present application provides a battery, the battery comprising a battery cell described above.

In a fourth aspect, the present application provides a power consuming device, the power consuming device comprising a battery described above.

In the top cover assembly, the battery cell, the battery, and the power consuming device described above, the first electrode hole and the second electrode hole in the body may be configured to lead out the positive electrode tab and a negative electrode tab, and the protruding portion is arranged on a side close to the first electrode hole in the length direction of the body. Therefore, the distance between the protruding portion and the second electrode hole is increased, which provides a larger arrangement space for the positive electrode tab or the negative electrode tab corresponding to the second electrode hole to increase the width, so that the positive electrode tab or the negative electrode tab corresponding to the second electrode hole has a larger width, the overcurrent area of the tab is increased, and thus the tab has a higher overcurrent capacity.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are illustratively described below.

### Brief Description of the Drawings

Various other advantages and benefits will become apparent to those of ordinary skill in the art upon reading the following detailed description of implementations. The accompanying drawings are merely for the purpose of illustrating the implementations, and are not to be construed as limiting the present application. Moreover, like components are denoted by like reference signs throughout the accompanying drawings. In the accompanying drawings:
FIG. 1 is a schematic structure diagram of a vehicle according to an embodiment of the present application;
FIG. 2 is a schematic exploded structure diagram of a battery according to an embodiment of the present application;
FIG. 3 is a schematic exploded structure diagram of a battery cell according to an embodiment of the present application;
FIG. 4 is a schematic diagram of a connection structure between a top cover assembly and an electrode assembly according to an embodiment of the present application;
FIG. 5 is a plan view of the connection structure between the top cover assembly and the electrode assembly shown in FIG. 4;
FIG. 6 is a schematic plan view of a top cover assembly according to an embodiment of the present application;
FIG. 7 is a schematic diagram of a connection structure between a top cover assembly and an electrode assembly according to another embodiment of the present application;
FIG. 8 is a plan view of the connection structure between the top cover assembly and the electrode assembly shown in FIG. 7;
FIG. 9 is a schematic plan view of a top cover assembly according to another embodiment of the present application;
FIG. 10 is a schematic structure diagram of an electrode assembly according to another embodiment of the present application; and
FIG. 11 is a schematic diagram of a connection structure between a top cover assembly and an electrode assembly according to another embodiment of the present application.

Description of reference signs: 1000. vehicle; 100. battery; 200. controller; 300. motor; 10. case; 20. battery cell; 11. first portion; 12. second portion; 21. top cover assembly; 22. shell; 23. electrode assembly; 211. body; 212. protruding portion; 231. first tab; 232. second tab; 2111. first electrode hole; 2112. second electrode hole; 2113. pressure relief hole; 2114. top cover sheet; 2115. insulating sheet; 2121. first sub-protruding portion; 2122. second sub-protruding portion; 2123. through hole; a. thickness direction; b. length direction; c. width direction.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the device or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, market demand for the traction batteries is also expanding.

In a battery structure, an overcurrent capacity of a tab may affect a charge-discharge capacity of a battery, and the overcurrent capacity of the tab is determined by an overcurrent area of the tab. Specifically, a larger overcurrent area of the tab indicates a higher overcurrent capacity of the tab. On the contrary, a smaller overcurrent area of the tab indicates a lower overcurrent capacity of the tab. The overcurrent area of the tab is determined by a thickness and width of the tab, and the overcurrent area is proportional to the thickness and width.

Currently, in order to improve the safety performance of the battery, a composite current collector with a multilayer structure is adopted for some electrode plates, that is, a tab structure made of a composite substrate is formed. For example, the current collector comprises an insulating layer and electrically conductive layers respectively arranged on two surfaces of the insulating layer, and surfaces of the electrically conductive layers each are coated with an active material layer. Although the thickness of the tab can be increased by the above structure, and the overcurrent capacity of the tab can be improved to some extent, the weight of the entire tab also increases as the thickness of the tab increases, which does not facilitate lightweight of the battery. Therefore, on the basis of considering both lightweight and overcurrent capacity, a solution in which the overcurrent capacity of the tab is improved by increasing the thickness of the tab has great limitations in practical applications. That is, currently, an increase in the thickness of the tab has reached an upper limit. In order to ensure the service performance of the battery, it is impossible to continue to improve the overcurrent capacity of the tab by increasing the thickness of the tab.

In addition, the applicant has noticed that when the tab structure made of the composite substrate is adopted, the proportion of the electrically conductive layers in the overall structure of the tab may be reduced since the composite substrate comprises the insulating layer. A smaller proportion of the electrically conductive layers indicates a lighter weight of the tab but a lower overcurrent capacity of the tab.

Therefore, for the tab made of the composite substrate, on the basis of lightweight, it is necessary to increase the overcurrent area of the tab in other ways, so as to improve the overcurrent capacity of the tab to make up for the problem of a low overcurrent capacity caused by its own structure.

Based on the above considerations, in order to solve the problem that the overcurrent area of the tab itself is small due to the small width of the tab, which leads to the low overcurrent capacity of the tab, the applicant has designed a top cover assembly through an in-depth research. By eccentrically arranging the protruding portion close to the first electrode hole in the length direction of the body, the distance between the second electrode hole and the protruding portion is increased, and the tab that needs to be increased in width is correspondingly arranged at the second electrode hole, so as to provide a larger avoidance space for the increase of the width of the tab, thereby improving the overcurrent capacity of the tab.

The battery cell disclosed in the embodiments of the present application may be used in, but is not limited to, a power consuming device, such as a vehicle, a ship, or an aircraft. A power system of the power consuming device may be composed of the battery cells, batteries, and the like disclosed in the present application, which alleviates and automatically adjusts deterioration of an expansion force of cells, compensates for consumption of an electrolyte, and improves performance stability and service life of the battery.

The embodiments of the present application provide a power consuming device using a battery as a power supply. The power consuming device may be, but is not limited to, a mobile phone, a tablet, a laptop, an electric toy, an electric tool, an electromobile, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

Hereinafter, for the convenience of illustration, a vehicle 1000 is taken as an example to describe a power consuming device according to an embodiment of the present application.

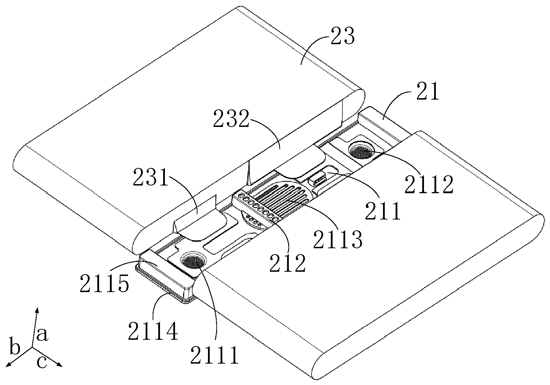

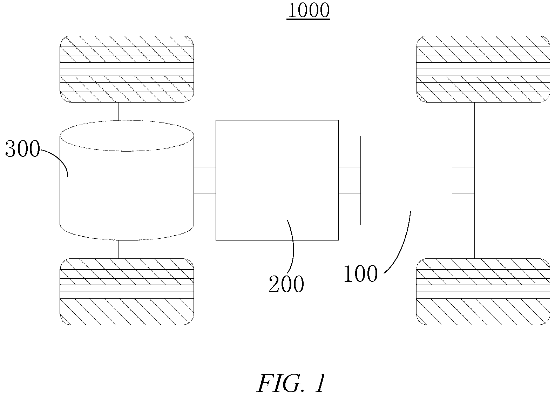

Referring to FIG. 1, FIG. 1 is a schematic structure diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, or an extended-range vehicle, etc. A battery 100 is provided inside the vehicle 1000, and the battery 100 may be provided at the bottom, the front or the tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but also serve as a power supply for driving the vehicle 1000, instead of or partially instead of fuel or natural gas, to provide driving power for the vehicle 1000.

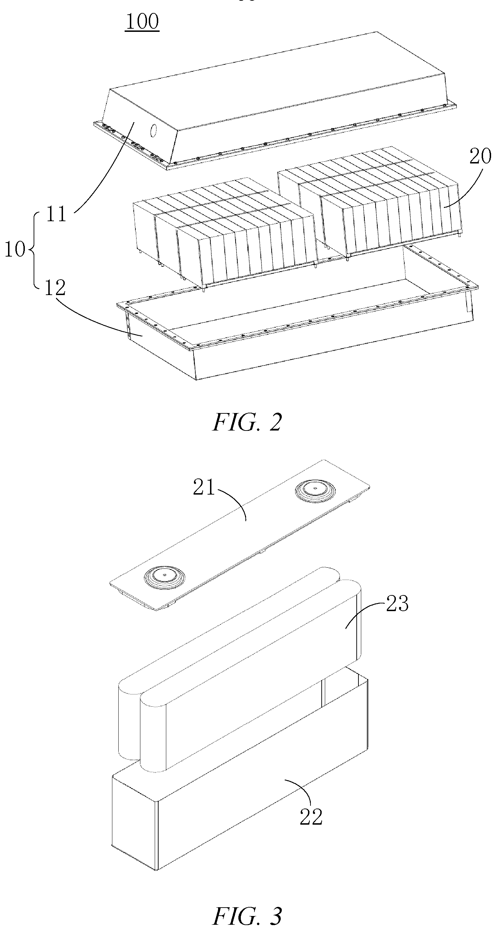

Referring to FIG. 2, FIG. 2 is an exploded view of the battery 100 according to some embodiments of the present application. The battery 100 includes a case 10 and a battery cell 20. The battery cell 20 is accommodated in the case 10. The case 10 is configured to provide an accommodating space for the battery cell 20, and the case 10 may have various structures. In some embodiments, the case 10 may include a first portion 11 and a second portion 12. The first portion 11 and the second portion 12 are fitted to each other in a covered manner, and the first portion 11 and the second portion 12 jointly define the accommodating space for accommodating the battery cell 20. The second portion 12 may be of a hollow structure with one end open, the first portion 11 may be of a plate-like structure, and the first portion 11 covers an open side of the second portion 12 such that the first portion 11 and the second portion 12 jointly define the accommodating space; and the first portion 11 and the second portion 12 may also each be of a hollow structure with one side open, and an open side of the first portion 11 covers an open side of the second portion 12. Of course, the case 10 formed by the first portion 11 and the second portion 12 may be in various shapes, such as a cylinder and a cuboid.

In the battery 100, a plurality of battery cells 20 may be provided. The plurality of battery cells 20 may be in series connection, in parallel connection, or in parallel-series connection. The parallel-series connection means that some of the plurality of battery cells 20 are connected in series and some are connected in parallel. The plurality of battery cells 20 may be directly connected together in series, or in parallel, or in series-parallel, and then a whole composed of the plurality of battery cells 20 is accommodated in the case 10. Of course, the battery 100 may also be in such a way that a plurality of battery cells 20 are first connected in series or in parallel or in series and parallel to form a battery module, and then a plurality of battery modules are connected in series or in parallel or in series and parallel to form a whole and are accommodated in the case 10. The battery 100 may further include other structures. For example, the battery 100 may further include a busbar component for achieving electrical connections between the plurality of battery cells 20.

Each battery cell 20 may be a secondary battery or a primary battery, and may also be a lithium-sulfur battery, a sodium-ion battery, or a magnesium-ion battery, but is not limited thereto. The battery cell 20 may be in the shape of a cylinder, a flat body, a cuboid, etc.

Referring to FIG. 3, FIG. 3 is a schematic structure exploded view of a battery cell 20 according to some embodiments of the present application. The battery cell 20 refers to a minimum unit that constitutes a battery. As shown in FIG. 3, the battery cell 20 includes an end cap, a shell 22, an electrode assembly 23, and other functional components.

The end cap refers to a component that covers an opening of the shell 22 to isolate an internal environment of the battery cell 20 from an external environment. Without limitation, the end cap may be shaped to adapt to the shape of the shell 22 so as to fit with the shell 22. Alternatively, the end cap may be made of a material having certain hardness and strength (such as aluminum alloy), such that the end cap is less prone to deformation when subjected to compression and collision, such that the battery cell 20 can have a higher structural strength, and safety performance can also be improved. Functional components, such as electrode terminals, may be provided on the end cap. The electrode terminals may be used for an electrical connection to the electrode assembly 23 for outputting or inputting electric energy of the battery cell 20. In some embodiments, the end cap may be further provided with a pressure relief mechanism configured to release an internal pressure when the internal pressure or temperature of the battery cell 20 reaches a threshold. The end cap may also be made of various materials, such as copper, iron, aluminum, stainless steel, aluminum alloy and plastic, which is not specifically limited in the embodiments of the present application. In some embodiments, an insulating member may also be provided on an inner side of the end cap, and the insulating member may be configured to isolate an electrically connected component in the shell 22 from the end cap to reduce the risk of a short circuit. Illustratively, the insulating member may be made of plastic, rubber, etc.

The shell 22 is an assembly that is configured to fit with the end cap so as to create the internal environment of the battery cell 20, wherein the created internal environment may be used to accommodate the electrode assembly 23, an electrolyte and other components. The shell 22 and the end cap may be independent components, and the shell 22 may be provided with an opening, at which the end cap covers the opening to create the internal environment of the battery cell 20. Without limitation, the end cap and the shell 22 may also be integrated. Specifically, the end cap and the shell 22 may first form a common connecting surface before other components are placed into the shell. The end cap covers the shell 22 when the interior of the shell 22 needs to be packaged. The shell 22 may have various shapes and various sizes, for example, in the shape of a cuboid, a cylinder, a hexagonal prism, etc. Specifically, the shape of the shell 22 may be determined according to the specific shape and size of the electrode assembly 23. The shell 22 may be made of various materials, such as copper, iron, aluminum, stainless steel, aluminum alloy, plastic, etc., which is not specifically limited in the embodiments of the present application.

The electrode assembly 23 is a component, where an electrochemical reaction occurs, in the battery cell 100. The shell 22 may comprise one or more electrode assemblies 23 therein. The electrode assembly 23 is mainly formed by winding or stacking a positive electrode plate and a negative electrode plate, and a separator is generally arranged between the positive electrode plate and the negative electrode plate. Portions of the positive electrode plate and the negative electrode plate that have an active material constitute a main body portion of the electrode assembly, and portions of the positive electrode plate and the negative electrode plate that have no active material each constitute a tab. A positive electrode tab and a negative electrode tab may be both located at one end of the main body portion or respectively at two ends of the main body portion. During the charging and discharging of the battery, a positive active material and a negative active material react with the electrolyte, and the tabs are connected to the electrode terminals to form a current loop.

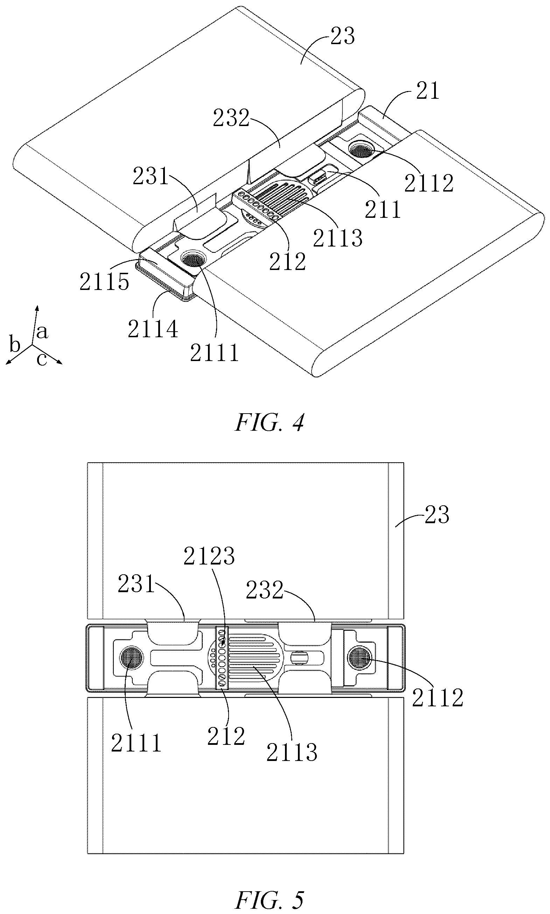

According to some embodiments of the present application, referring to FIGS. 4, 5 and 6, some embodiments of the present application provide a top cover assembly 21 for covering a shell 22 of a battery cell 20, and the top cover assembly 21 comprises a body 211 and a protruding portion 212. The body 211 is provided with a first electrode hole 2111 and a second electrode hole 2112 in a thickness direction a of the body itself, and the first electrode hole 2111 and the second electrode hole 2112 are spaced in a length direction b of the body 211. The protruding portion 212 protrudes in the thickness direction a of the body 211 to be formed on a side surface of the body 211 that is configured to face an interior of the shell 22, and the protruding portion 212 is located between the first electrode hole 2111 and the second electrode hole 2112 in the length direction b of the body 211. The protruding portion 212 is located on a side close to the first electrode hole 2111 in the length direction b of the body 211, and the length direction b of the body 211 is perpendicular to the thickness direction a of the body 211.

It should be noted that the battery cell 20 usually comprises a shell, a top cover assembly 21, and an electrode assembly 23 accommodated in the shell. The electrode assembly 23 is placed into the shell from the opening of the shell, and the top cover assembly 21 is configured to seal the opening of the shell so as to form a closed protective space inside the shell and protect the electrode assembly 23 inside the shell.

Further, when the electrode assembly 23 is accommodated in the shell, the tabs in the electrode assembly 23 are connected to an adapter in the top cover assembly 21, and the adapter leads the positive electrode and the negative electrode out of the top cover assembly 21 to facilitate an electrical connection.

Specifically, the body 211 of the top cover assembly 21 refers to a component that is hermetically arranged at the opening of the shell to achieve sealing protection for the electrode assembly 23 inside the shell. The protruding portion 212 refers to a structure protruding from the body 211 in the thickness direction a of the body 211, and when the top cover assembly 21 is hermetically arranged at the opening of the shell, the protruding portion 212 is arranged towards the interior of the shell. Therefore, the protruding portion 212 can limit the electrode assembly 23 inside the shell in the thickness direction a of the body 211, so as to prevent the structure of the electrode assembly 23 from being damaged due to position deviation of the electrode assembly 23 inside the shell.

The thickness direction a of the body 211 refers to a direction parallel to a height direction of the battery cell 20 when the top cover assembly 21 covers the shell of the battery cell 20. The length direction b of the body 211 refers to a direction parallel to the length direction b of the battery cell 20 when the top cover assembly 21 covers the shell of the battery cell 20.

In addition, electrode terminals may be arranged in the first electrode hole 2111 and the second electrode hole 2112 in the body 211, and the electrode terminals can be connected to the positive electrode tab and the negative electrode tab, thereby forming a current loop. Specifically, after the tabs are connected to the adapter, the positive electrode tab and the negative electrode tab are respectively connected to the electrode terminals in the first electrode hole 2111 and the second electrode hole 2112 by the adapter, thereby forming a current loop, such that the battery cell 20 can be normally charged or discharged.

It can be understood that when the top cover assembly 21 covers the shell of the battery cell 20, the second electrode hole 2112 in the body 211 is arranged corresponding to the tab of the electrode assembly 23 that needs to be increased in width, and the first electrode hole 2111 in the body 211 is naturally arranged corresponding to the other tab. The tab that needs to be increased in width may refer to a tab that is made of a composite substrate and needs to have a sufficient overcurrent capacity. Therefore, the tab that needs to be increased in width may be either a positive electrode tab or a negative electrode tab.

With the above structure, the protruding portion 212 is eccentrically arranged on the body 211 in the length direction b of the body 211, and the protruding portion 212 is biased to a side of the first electrode hole 2111, that is, a distance between the protruding portion 212 and the first electrode hole 2111 is less than a distance between the protruding portion 212 and the second electrode hole 2112 in the length direction b of the body 211. Therefore, a space formed between the protruding portion 212 and the second electrode hole 2112 may be used to accommodate one tab in the electrode assembly 23 that needs to be increased in width. Correspondingly, a space formed between the protruding portion 212 and the first electrode hole 2111 is used to accommodate the other tab in the electrode assembly 23.

On this basis, the width of the tab arranged corresponding to the second electrode hole 2112 may be increased, thereby increasing the overcurrent area of the tab, and improving the overcurrent capacity of the tab, so as to improve the safety performance and service life of the battery cell 20. Referring to FIG. 4, the width of the tab refers to the dimension length of the tab in the length direction b of the body 211.

According to some embodiments of the present application, a length of the protruding portion 212 is less than or equal to 20 mm in the length direction b of the body 211.

The length of the protruding portion 212 may affect the arrangement space of the width of the tab, that is, a larger length of the protruding portion 212 and a smaller distance between the protruding portion 212 and the first electrode hole 2111 or the second electrode hole 2112 indicate a smaller space available for accommodating the tab, resulting in a smaller width of the tab. On the contrary, a smaller length of the protruding portion 212 and a larger distance between the protruding portion 212 and the first electrode hole 2111 or the second electrode hole 2112 indicate a larger space available for accommodating the tab, resulting in a larger width of the tab.

In view of this, the length of the protruding portion 212 is less than or equal to 20 mm, so that the distance between the protruding portion 212 and the first electrode hole 2111 or the second electrode hole 2112 can be maximized on the basis that the protruding portion 212 is convenient to mold and manufacture, thereby increasing the width of the tab and improving the overcurrent capacity of the tab.

According to some embodiments of the present application, a height of the protruding portion 212 is less than or equal to 10 mm in the thickness direction a of the body 211.

When the top cover assembly 21 covers the shell 22 of the battery cell 20, due to the limited internal space of the shell 22, if the protruding portion 212 has a larger height, the space in the shell 22 that is available for accommodating the electrode assembly 23 is smaller, resulting in a smaller volume of the electrode assembly 23, which may affect the service performance of the battery cell 20.

Therefore, the height of the protruding portion 212 is set to be less than or equal to 10 mm, a larger accommodating space can be provided for the electrode assembly 23 inside the shell on the basis that the protruding portion 212 is convenient to mold and manufacture, so as to improve the service performance of the battery cell.

According to some embodiments of the present application, a width of the protruding portion 212 is less than or equal to a width of the body 211 in a width direction c of the body 211, and the width direction c of the body 211 is perpendicular to the length direction b of the body 211 and the thickness direction a of the body 211.

It should be noted that the width direction c of the body 211 refers to a direction parallel to the width direction of the battery cell when the top cover assembly 21 covers the shell of the battery cell, that is, a direction perpendicular to a surface of the battery cell.

When the top cover assembly 21 covers the shell of the battery cell, the protruding portion 212 is arranged towards the interior of the shell. Therefore, the width of the protruding portion 212 is less than or equal to the width of the body 211, so that the protruding portion 212 can be smoothly accommodated in the shell, and the sealing performance of the top cover assembly 21 to the shell is better.

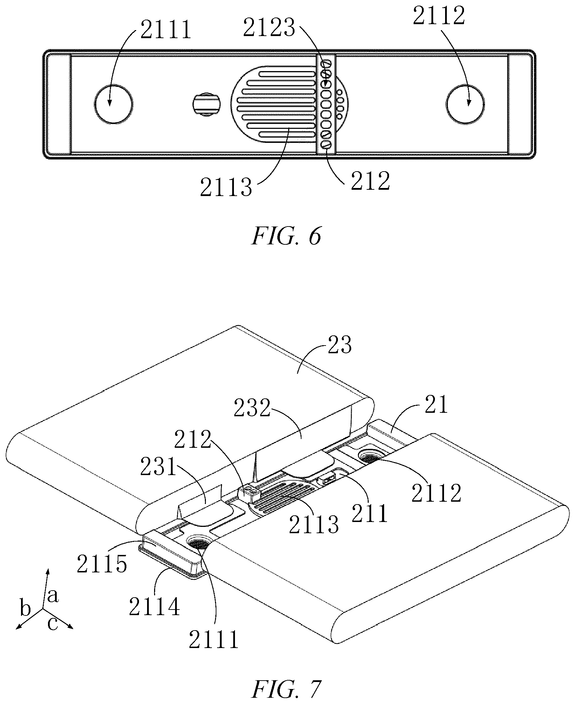

Referring to FIGS. 7, 8 and 9, according to some embodiments of the present application, the protruding portion 212 comprises a first sub-protruding portion 2121 and a second sub-protruding portion 2122. The first sub-protruding portion 2121 and the second sub-protruding portion 2122 are spaced in the width direction c of the body 211, or the first sub-protruding portion 2121 and the second sub-protruding portion 2122 are continuously arranged in the width direction c of the body 211.

The above case includes two embodiments. In the first embodiment, when the first sub-protruding portion 2121 and the second sub-protruding portion 2122 are continuously arranged in the width direction c of the body 211, the first sub-protruding portion 2121 and the second sub-protruding portion 2122 are integrally arranged to jointly form an integral structure. In the first embodiment, the first sub-protruding portion 2121 and the second sub-protruding portion 2122 are of an integrated structure, which facilitates the manufacturing and molding of the protruding portion 212.

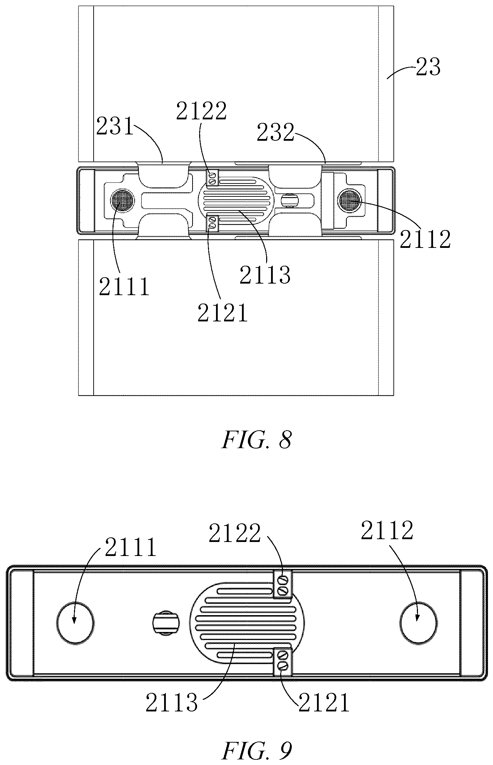

In the second embodiment, as shown in FIGS. 7 and 9, the first sub-protruding portion 2121 and the second sub-protruding portion 2122 are spaced in the width direction c of the body 211. In this case, the first sub-protruding portion 2121 and the second sub-protruding portion 2122 are arranged in a split manner, and a certain spacing is formed between the first sub-protruding portion 2121 and the second sub-protruding portion 2122 in the width direction c of the body 211. In the second embodiment, since the protruding portion 212 is arranged with a two-section structure, if the protruding portion 212 is eccentrically arranged in the length direction b of the body 211 and close to the first electrode hole 2111, a larger avoidance space can be further provided for the tab corresponding to the second electrode hole 2112, thereby further increasing the width of the tab corresponding to the second electrode hole 2112 and improving the overcurrent capacity.

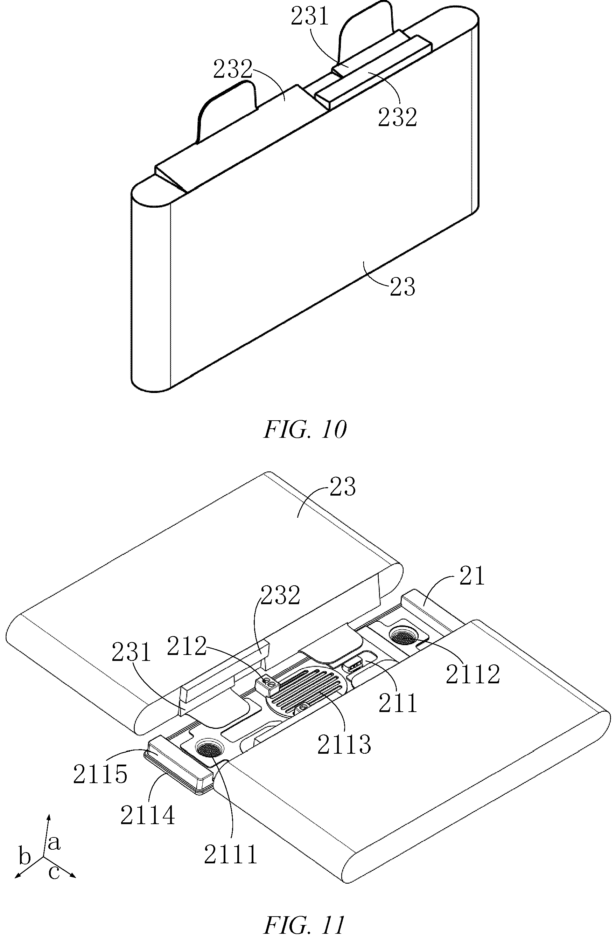

Referring to FIGS. 9, 10 and 11, specifically, when the first sub-protruding portion 2121 and the second sub-protruding portion 2122 are spaced in the width direction c of the body 211, a certain spacing is formed between the first sub-protruding portion 2121 and the second sub-protruding portion 2122. Therefore, a first tab 231 and a second tab 232 may be arranged as shown in FIGS. 10 and 11, that is, the second tab 232 can be further extended by means of a gap space between the first sub-protruding portion 2121 and the second sub-protruding portion 2122 to further increase the width of the second tab 232 and improve the overcurrent capacity of the second tab. When the electrode assembly 23 fits with the top cover assembly 21, the top cover assembly 21 covers the electrode assembly 23, that is, for the position between the top cover assembly 21 and the electrode assembly 23, the electrode assembly 23 rotates clockwise by 90° from the position shown in FIG. 7, so that an end surface of the electrode assembly 23 that is provided with the tab and an end surface of the top cover assembly 21 that is provided with the first electrode hole 2111 and the second electrode hole 2112 face each other. In this case, as shown in FIG. 11, an extended end of the second tab 232 can penetrate into the gap space between the first sub-protruding portion 2121 and the second sub-protruding portion 2122, so that the electrode assembly 23 smoothly fits with the top cover assembly 21.

According to some embodiments of the present application, the body 211 is provided with a pressure relief hole 2113 penetrating in the thickness direction a of the body itself, and the protruding portion 212 is provided with a through hole 2123 penetrating in the thickness direction a of the body 211 and communicating with the pressure relief hole 2113.

It should be noted that the pressure relief hole 2113 is a pressure relief mechanism configured to relieve an internal pressure of the battery cell 20 when the internal pressure or temperature of the battery cell 20 reaches a threshold.

Specifically, the protruding portion 212 is provided with the through hole 2123, which communicates with the pressure relief hole 2113, so that when the battery cell 20 needs pressure relief, the internal pressure of the battery cell 20 can be released outwards from the pressure relief hole 2113 through the through hole 2123 to prevent the protruding portion 212 from affecting the pressure relief of the battery cell 20, thereby improving the safety performance of the battery cell 20.

According to some embodiments of the present application, in a plane perpendicular to the thickness direction a of the body 211, a projection of the protruding portion 212 partially overlaps a projection of the pressure relief hole 2113.

Specifically, the part of the protruding portion 212 overlapping the pressure relief hole 2113 can provide a certain function of stabilizing the pressure relief hole 2113, so as to prevent a pressure relief member in the pressure relief hole 2113 from loosening, thereby ensuring structural integrity of the pressure relief hole 2113 and achieving smooth pressure relief of the battery cell 20.

According to some embodiments of the present application, referring to FIG. 4 or 7, the body 211 comprises a top cover sheet 2114 and insulating sheets 2115, wherein the insulating sheets 2115 are stacked in a thickness direction a of the top cover sheet 2114 on a side of the top cover sheet 2114 that is configured to face the interior of the shell 22. The protruding portion 212 protrudes to be formed on a side surface of the insulating sheets 2115 that face away from the top cover sheet 2114.

It should be noted that the top cover sheet 2114 may also be referred to as an end cap. Optionally, the top cover sheet 2114 may be made of a material (such as aluminum alloy) with certain hardness and strength, and thus the top cover sheet 2114 is less prone to deformation when subjected to compression or collision, so that the battery cell 20 can have a higher structural strength, and the safety performance can also be improved.

As an insulating structure, an insulating member is arranged on a side of the top cover sheet 2114 that faces the shell 22, and is configured to isolate an electrically connected component in the shell 22 from the top cover sheet 2114, so as to reduce the risk of a short circuit. Illustratively, the insulating member may be made of plastic, rubber, etc.

According to some embodiments of the present application, a material of the insulating sheets 2115 is one or more of polypropylene, polyethylene, and polyethylene terephthalate.

Specifically, the insulating sheets 2115 may be made of one of polypropylene, polyethylene, and polyethylene terephthalate, or may be made by compositing more of polypropylene, polyethylene, and polyethylene terephthalate to form insulating sheets 2115 made of a composite material. When the insulating sheets 2115 are made of organic high polymers such as polypropylene, polyethylene, and polyethylene terephthalate, the molding of the insulating sheets 2115 and the assembly of the battery cell 20 can be facilitated.

According to some embodiments of the present application, the protruding portion 212 and the insulating sheets 2115 are of an integrally molded structure.

Specifically, the protruding portion 212 and the insulating sheets 2115 are integrally injection molded. The method of integrated injection molding is easy to operate, which facilitates industrialization of the manufacturing process.

It can be understood that when the protruding portion 212 and the insulating sheets 2115 are integrally injection molded, the protruding portion 212 may be made of the same material as the insulating sheets 2115.

Based on the same concept as the above top cover assembly 21, the present application further provides a battery cell 20. The battery cell 20 comprises a shell 22, a top cover assembly 21, and an electrode assembly 23. The shell 22 is internally provided with an accommodating space (not shown), and the shell 22 is provided with an opening (not shown) communicating with the accommodating space. The electrode assembly 23 is accommodated in the accommodating space, and the top cover assembly 21 hermetically covers the opening in a direction of the protruding portion 212 towards the opening.

The top cover assembly 21 and the shell 22 jointly hermetically arrange the electrode assembly 23 in the accommodating space, so that the structure of the electrode assembly 23 can be protected from the external environment, and it is ensured that the battery cell 20 can operate normally.

According to some embodiments of the present application, the electrode assembly 23 comprises a first tab 231 corresponding to the first electrode hole 2111 and a second tab 232 corresponding to the second electrode hole 2112. The second tab 232 is a composite substrate tab, and the protruding portion 212 is located on a side close to the first tab 231 in a length direction b of the top cover assembly 21, so as to form an avoidance space (not shown) for the second tab 232 to pass through on a side of the protruding portion 212 close to the second electrode hole 2112.

Since the second tab 232 is a composite substrate tab, the overcurrent capacity of the second tab 232 is lower than that of the first tab 231. Therefore, the first tab 231 is arranged corresponding to the first electrode hole 2111, and the second tab 232 is arranged corresponding to the second electrode hole 2112, such that the second tab 232 can have a larger width in the avoidance space, thereby increasing the overcurrent area of the second tab 232 and improving the overcurrent capacity of the second tab 232.

It can be understood that the second tab 232 may be a positive electrode tab or a negative electrode tab. When the positive electrode tab is a composite substrate tab, the second tab 232 is a positive electrode tab, and in this case, the first tab 231 is naturally a negative electrode tab. When the negative electrode tab is a composite substrate tab, the second tab 232 is a negative electrode tab, and in this case, the first tab 231 is naturally a positive electrode tab.

According to some embodiments of the present application, the second tab 232 is a positive electrode tab connected to a positive electrode composite current collector.

It should be noted that in practical applications, since the positive electrode tab is usually made of aluminum metal, while the negative electrode tab is usually made of nickel or nickel-plated copper, the overcurrent capacity of the positive electrode tab is usually lower than that of the negative electrode tab due to the material characteristics of the aluminum metal itself. Therefore, it is necessary to increase the overcurrent capacity of the positive electrode tab accordingly.

With the above structure, the positive electrode tab is arranged corresponding to the second electrode hole 2112, and the protruding portion 212 is close to the first electrode hole 2111. Therefore, the positive electrode tab has a larger arrangement space, so that the width of the positive electrode tab can be increased, the overcurrent area of the positive electrode tab can be increased, and the overcurrent capacity of the positive electrode tab can be improved.

According to some embodiments of the present application, a width of the second tab 232 is greater than a width of the first tab 231 in the length direction b of the top cover assembly 21.

Specifically, an avoidance space for the second tab 232 to pass through is formed between the protruding portion 212 and the second electrode hole 2112, so that the second tab 232 has a larger accommodating space. When the width of the second tab 232 is greater than the width of the first tab 231, the second tab 232 can have a larger overcurrent area, thereby improving the overcurrent capacity of the second tab 232.

According to some embodiments of the present application, a distance between the protruding portion 212 and the first tab 231 is 0-12 mm in the length direction b of the top cover assembly 21.

Specifically, the distance between the protruding portion 212 and the first tab 231 in the length direction b of the top cover assembly 21 refers to a distance between an edge of the protruding portion 212 and an edge of the first tab 231. The distance between the protruding portion 212 and the first tab 231 is set to 0-12 mm, which can avoid position overlapping between the protruding portion 212 and the first tab 231, thereby avoiding mutual interference.

Based on the same concept as the battery cell 20 described above, the present application further provides a battery 100, the battery 100 comprising the battery cell 20 described above.

Based on the same concept as the battery 100 described above, the present application further provides a power consuming device, the power consuming device comprising the battery 100 described above.

According to some embodiments of the present application, the protruding portion 212 is arranged close to a side of the first electrode hole 2111 in the length direction b of the body 211 in the top cover assembly 21, so that a distance between the protruding portion 212 and the first electrode hole 2111 is less than a distance between the protruding portion 212 and the second electrode hole 2112.

Therefore, when the top cover assembly 21 covers the shell 22 of the battery cell 20, the second electrode hole 2112 is arranged corresponding to the positive electrode tab of the electrode assembly 23, and the first electrode hole 2111 is arranged corresponding to the negative electrode tab of the electrode assembly 23, so that the positive electrode tab has a larger accommodating space, thereby increasing the width of the positive electrode tab, increasing the overcurrent area of the positive electrode tab, and improving the overcurrent capacity of the positive electrode tab. Therefore, the safety performance and service life of the battery cell 20 can be improved.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein, but includes all the technical solutions that fall within the scope of the claims.

## Claims

1. A top cover assembly for covering a shell of a battery cell, the top cover assembly comprising:
a body, the body being provided with a first electrode hole and a second electrode hole in a thickness direction of the body itself, and the first electrode hole and the second electrode hole being spaced in a length direction of the body; and
a protruding portion protruding in the thickness direction of the body to be formed on a side surface of the body that is configured to face an interior of the shell, the protruding portion being located between the first electrode hole and the second electrode hole in the length direction of the body,
wherein the protruding portion is located on a side close to the first electrode hole in the length direction of the body, and the length direction of the body is perpendicular to the thickness direction of the body.

2. The top cover assembly according to claim 1, wherein a length of the protruding portion is less than or equal to 20 mm in the length direction of the body.

3. The top cover assembly according to claim 1 or 2, wherein a height of the protruding portion is less than or equal to 10 mm in the thickness direction of the body.

4. The top cover assembly according to any one of claims 1-3, wherein a width of the protruding portion is less than or equal to a width of the body in a width direction of the body, and the width direction of the body is perpendicular to the length direction of the body and the thickness direction of the body.

5. The top cover assembly according to any one of claims 1-4, wherein the protruding portion comprises a first sub-protruding portion and a second sub-protruding portion, wherein
the first sub-protruding portion and the second sub-protruding portion are spaced in a width direction of the body; or
the first sub-protruding portion and the second sub-protruding portion are continuously arranged in the width direction of the body.

6. The top cover assembly according to any one of claims 1-5, wherein the body is provided with a pressure relief hole penetrating in the thickness direction of the body itself, and the protruding portion is provided with a through hole communicating with the pressure relief hole.

7. The top cover assembly according to claim 6, wherein in a plane perpendicular to the thickness direction of the body, a projection of the protruding portion partially overlaps a projection of the pressure relief hole.

8. The top cover assembly according to any one of claims 1-7, wherein the body comprises:
a top cover sheet; and
insulating sheets stacked in a thickness direction of the top cover sheet on a side of the top cover sheet that is configured to face the interior of the shell, wherein
the protruding portion protrudes to be formed on a side surface of the insulating sheets that face away from the top cover sheet.

9. The top cover assembly according to claim 8, wherein a material of the insulating sheets is one or more of polypropylene, polyethylene, and polyethylene terephthalate.

10. The top cover assembly according to claim 8 or 9, wherein the protruding portion and the insulating sheets are of an integrally molded structure.

11. A battery cell, comprising:
a shell, the shell being internally provided with an accommodating space, and the shell being provided with an opening communicating with the accommodating space;
a top cover assembly according to any one of claims 1-10, the top cover assembly hermetically covering the opening in a direction of the protruding portion towards the opening; and
an electrode assembly accommodated in the accommodating space.

12. The battery cell according to claim 11, wherein the electrode assembly comprises a first tab corresponding to the first electrode hole and a second tab corresponding to the second electrode hole, wherein
the second tab is a composite substrate tab, and the protruding portion is located on a side close to the first tab in a length direction of the top cover assembly, so as to form an avoidance space for the second tab to pass through on a side of the protruding portion close to the second electrode hole.

13. The battery cell according to claim 12, wherein the second tab is a positive electrode tab connected to a positive electrode composite current collector.

14. The battery cell according to claim 12 or 13, wherein a width of the second tab is greater than a width of the first tab in the length direction of the top cover assembly.

15. The battery cell according to any one of claims 12-14, wherein a distance between the protruding portion and the first tab is 0-12 mm in the length direction of the top cover assembly.

16. A battery, comprising a battery cell according to any one of claims 11-15.

17. A power consuming device, comprising a battery according to claim 16.
